# NEUE EUROPÄISCHE PATENTSCHRIFT

(11) **EP 1 852 252 B2**
(45) Veröffentlichungstag und Bekanntmachung des Hinweises auf die Entscheidung über den Einspruch: **11.06.2014**
(45) Hinweis auf die Patenterteilung: 04.03.2009
(21) Anmeldenummer: 06009214.5
(22) Anmeldetag: 04.05.2006
(51) Int. Cl.: B32B 18/00, F16L 59/00, C04B 35/532

(54) **Hochtemperaturbeständiger Verbundwerkstoff**
High-temperature resistant composite material
Matériau composit résistant à haute température

(43) Veröffentlichungstag der Anmeldung: 07.11.2007
(73) Patentinhaber: SGL Carbon SE, 65201 Wiesbaden (DE)
(72) Erfinder: Hingst, Karl, 86156 Augsburg (DE); Christ, Martin, Dr., 86159 Augsburg (DE); Eber, Elmar, 86707 Kühlenthal (DE)
(74) Vertreter: Manitz, Finsterwald & Partner GbR

(56) Entgegenhaltungen:
- EP-A- 0 835 900
- EP-A1- 0 388 666
- EP-A2- 0 426 608
- EP-B1- 0 284 298
- EP-B1- 0 527 948
- EP-B1- 0 538 417
- WO-A2-2004/063612
- FR-A- 1 301 838
- FR-A1- 2 411 703
- FR-A1- 2 562 718
- FR-A1- 2 894 651
- GB-A- 393 259
- RO-A2- 86 793
- US-A- 758 239
- US-A- 2 270 199
- US-A- 3 404 061
- US-A- 3 441 529
- US-A- 4 654 242
- US-A- 4 686 128
- US-A- 4 927 994
- US-A- 5 280 063
- US-A- 5 368 792
- US-A1- 2002 109 125
- US-A1- 2004 076 810
- US-B1- 6 387 462
- PATENT ABSTRACTS OF JAPAN Bd. 1998, Nr. 14, 31. Dezember 1998 (1998-12-31) & JP 10 245491 A (OSAKA PREFECTURE; NIPPON KARU KK), 14. September 1998 (1998-09-14)
- PATENT ABSTRACTS OF JAPAN Bd. 015, Nr. 104 (C-0814), 13. März 1991 (1991-03-13) & JP 03 000793 A (LIGNYTE CO LTD), 7. Januar 1991 (1991-01-07)
- G. JURI ET AL.: 'High-Purity Graphite Powders for High Performance' PROCESS ENGINEERING Nr. 4, 2007, Seiten E22 - E25
- N. CUNNINGHAM ET AL.: 'Structural and mechanical characterization of as-compacted powder mixtures of graphite and phenolic resin' ELSEVIER Bd. 43, 2005, Seiten 3054 - 3066
- H.C. NICHOLSON: 'Bonding of a pyrolytic graphite Hypervelocity Impact Target' ASTRONUCLEAR LABORATORY 15 September 1965,

## Beschreibung

Gegenstand der Erfindung sind hochtemperaturbeständige Verbundwerkstoffe, geeignet für die Verwendung in thermischen Isolierungen, Hitzeschilden, Ofeneinbauten u.ä.

Konstruktionsmaterialien für Hochtemperaturöfen und -reaktoren müssen sowohl thermisch isolierend sein als auch beständig gegenüber hohen Temperaturen und inert gegenüber den im Inneren des Ofens oder Reaktors reagierenden oder freigesetzten Substanzen. Wegen ihrer hohen Hitzestabilität werden für Hochtemperaturanwendungen, d.h. bei Temperaturen oberhalb von 800 °C oder sogar oberhalb von 1.000 °C in nichtoxidierender Atmosphäre häufig auf Kohlenstoff oder Graphit basierende Konstruktionswerkstoffe eingesetzt.
Der durch die Isolierung zu vermeidende Wärmeverlust kann sowohl durch Wärmestrahlung (vorwiegend bei Temperaturen oberhalb von 1.000 °C) als auch durch Wärmeleitung und Konvektion (vorwiegend bei Temperaturen unterhalb von 1.000 °C) erfolgen. Dichte reflektierende Materialien sind einerseits geeignet, die Wärmeabstrahlung und -konvektion zu verhindern, andererseits steigt mit zunehmender Dichte jedoch die thermische Leitfähigkeit. Materialien geringerer Dichte wiederum sind einerseits geeignet, die Wärmeleitung zu unterdrücken, andererseits jedoch weniger geeignet, die Konvektion zu verhindern.
Daher werden thermische Isolierungen bevorzugt aus Schichtverbundwerkstoffen ausgebildet, welche mindestens ein hochtemperaturbeständiges Material relativ geringer thermischer Leitfähigkeit (z.B. ein Filz aus Carbonfasern) zur Isolation gegen Wärmeleitung und ein zweites, dichtes reflektierendes Material (z,B, Graphitfolie) zur Isolation gegen Wärmestrahlung und Konvektion umfassen. Das dichtere Material trägt darüber hinaus zur mechanischen Stabilität des Verbunds bei.
Graphitfolie ist besonders geeignet als Bestandteil von Verbundwerkstoffen für thermische Isolierungen, denn sie ist biegsam und flexibel, kann sich also den für Öfen und Reaktoren typischen runden Formen anpassen. Außerdem zeichnet sich Graphitfolie durch eine hohe Anisotropie der thermischen Leitfähigkeit aus. Wegen der bevorzugten Wärmeleitung in der Folienebene erfolgt ein Temperaturausgleich, und lokale Überhitzungen (hot spots) in der Isolierung werden vermieden. Weitere Vorteile sind die geringe Fluiddurchlässigkeit und die reflektierende Oberfläche von Graphitfolie. Graphitfolie hat typischerweise eine Dicke im Bereich von 0,3 bis 1,5 cm und eine Dichte im Bereich von 0,4 bis 1,6 g/cm³.
Graphitfolie wird in bekannter Weise durch Verdichten von durch thermische Schockbehandlung expandiertem Graphit (Graphitexpandat) erhalten.

In der Patentanmeldung WO2004/063612 wird ein wärmeisolierender Verbund beschrieben, der mindestens eine Schicht aus höher verdichteten Graphitexpandat (Dichte mindestens 0,4 g/cm³, bevorzugt 0,5 bis 1,6 g/cm³) und mindestens eine Schicht aus weniger hoch verdichtetem Graphitexpandat (Dichte kleiner als 0,4 g/cm³, bevorzugt 0,05 bis 0,3 g/cm³) umfasst, die durch einen carbonisierten Binder (carbonisiertes Phenolharz, Pech o.ä.) miteinander verbunden sind. Die Schicht aus höher verdichtetem Graphitexpandat wird so dünn gebildet, wie es die Anforderungen an die mechanische Stabilität und Impermeabilität zulassen (typischerweise 0,3 bis 1,5 mm), die Schicht aus weniger hoch verdichtetem Graphitexpandat wird so dick ausgebildet, wie für die thermische Isolation nötig (typischerweise zwischen 5 und 20 mm). Die Struktur kann auch als Sandwich ausgebildet werden, wobei zwei Schichten aus höher verdichtetem Graphitexpandat eine Schicht aus weniger hoch verdichtetem Graphitexpandat umschließen. So wird das Herausbrechen von Partikeln aus der weniger hoch verdichteten Schicht verhindert.
Die Herstellung des Verbundes gemäß WO2004/06361 umfasst die prinzipiellen Schritte:
- Herstellen von mindestens einer weniger hoch verdichteten und mindestens einer höher verdichteten Schicht aus Graphitexpandat
- Verbinden der Schichten miteinander, wobei
- die weniger hoch verdichtete Schicht mit einem carbonisierbaren Binder beschichtet wird,
- ggf. vorhandene Lösungsmittel aus dem Binder verdampft werden,
- die höher verdichtete Schicht auf die binderbeschichtete weniger hoch verdichtete Schicht gebracht wird und
- der Binder durch Wärmebehandlung in nichtoxidierender Atmosphäre bei einer Temperatur, die mindestens der Einsatztemperatur des herzustellenden Isoliermaterials entspricht (typischerweise zwischen 800 und 1.000 °C) carbonisiert wird

WO2004/092628 offenbart ein thermisches Isoliermaterial, das mindestens eine Schicht oder ein Laminat aus mehreren Schichten Graphitfolie enthält, sowie mindestens eine Schicht aus einem hinsichtlich der thermischen Leitfähigkeit isotropen wärmeisolierenden carbonfaserverstärktem Kohlenstoffmaterial. Die Dicke des Laminats aus Graphitfolien beträgt vorzugsweise bis 2 cm, die Dicke der isotropen Isolierschicht 1 bis 10 cm bei einer Dichte von vorzugsweise 0,1 bis 0,5 g/cm³. Die innere (d.h. der Wärmequelle zugewandte) Schicht aus Graphitfolie wirkt reflektierend und verhindert lokale Überhitzungen. Die äußere Schicht vermindert wegen ihrer geringen Dichte den Wärmeverlust durch Wärmeleitung.

Die miteinander zu laminierenden Graphitfolien werden jeweils im Wechsel mit einer Lage aus einem beidseitig mit carbonisierbarem Binder (z.B. Phenolharz) beschichteten, sich bei Hitze unter Zurücklassung eines Kohlenstoffrückstands zersetzenden Material (z.B. Kraftpapier) übereinander gestapelt. Die bei der Zersetzung der Zwischenschichten entstehenden Poren erlauben den Austritt der beim Aushärten und Carbonisieren des Binders freigesetzten Gase. Die Verbindung des Laminats aus Graphitfolien mit der Schicht aus isotropem carbonfaserverstärkten Kohlenstoff erfolgt mittels eines carbonisierbaren Zements. Vorzugsweise enthält der Zement neben Lösungsmittel und einem polymerisierbaren Monomeren als sog. Füller Kohlenstoffpartikel in einen Volumrnanteil von 20 bis 60 %. Als geeignete Kohlenstoffpartikel wurden Ruß (carbon black), Pech oder gemahlener Koks, jeweils mit einer Partikelgröße von weniger als 20 µm, vorgeschlagen. Bei der Herstellung der Verbindung zwischen Graphitfolienlaminat und der Schicht aus carbonfaserverstärktem Kohlenstoff wird der Zement zunächst bei einer Temperatur von 250 °C bis 300 °C aktiviert und anschließend bei weiterer Erhitzung auf 800 °C carbonisiert.

Entscheidend für die zuverlässige Funktion derartiger Schichtverbundwerkstoffe ist die Verbindung zwischen den aus verschiedenen Werkstoffen bestehenden Schichten. Die Verbindung muss einen zuverlässigen Zusammenhalt gewähren, darf aber andererseits keine signifikante Wärmeleitung zwischen den zu verbindenden Schichten bewirken.
Ein weiteres Problem ist der Aufbau von Spannungen aufgrund der unterschiedlichen thermischen Ausdehnung der verschiedenen Werkstoffe.

Gemäß dem Stand der Technik erfolgt die Verbindung zwischen den Werkstoffschichten mittels eines carbonisierbaren Binders, der ggf. Kohlenstoffpartikel als sog. Füller enthält, und anschließend carbonisiert wird.
Es wurde festgestellt, dass sich der Zusammenhalt zwischen den Schichten aus verschiedenen graphit- oder kohlenstoffbasierenden Konstruktionswerkstoffen verbessern lässt, wenn dem carbonisierbaren Binder flächige anisotrope Partikel aus Graphit zugesetzt werden, wobei die flächigen anisotropen Partikel Flocken aus Naturgraphit oder durch Zerkleinern von zu flächigen Gebilden verdichtetem Graphitexpandat erhaltene Partikel sind, und, wobei die thermische Leitfähigkeit in den flächigen anisotropen Partikeln aus Graphit entlang der Schichtebenen des Graphits mindestens um den Faktor 10 höher ist als senkrecht zu den Schichtebenen des Graphits.

Weitere Details, Varianten und Vorteile der Erfindung können der folgenden ausführlichen Beschreibung, der Figur und den Ausführungsbeispielen entnommen werden.

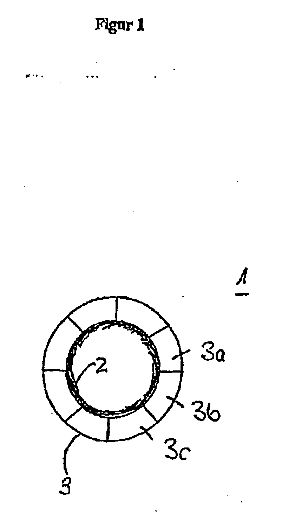

Figur 1 zeigt schematisch den Querschnitt eines zylinderförmigen Bauteils umfassend eine innere gewickelte Schicht und eine äußere Schicht, die aus einzelnen Segmenten aus verpresstem Graphitexpandat zusammengefügt ist.

Im Gegensatz zu herkömmlichen Füllern wie gemahlenem Koks sind die gemäß der vorliegenden Erfindung dem carbonisierbaren Binder zugesetzten Partikel flächig, d.h. ihre Dimension in der Fläche (Durchmesser) ist wesentlich größer als ihre Dicke.
Ein erfindungsgemäß geeigneter Füller ist Naturgraphit, dessen Partikel flockenförmig sind. Eine Alternative sind Partikel, welche durch Zerkleinern (Schneiden, Mahlen, Häckseln oder Shreddern) von zu flächigen Gebilden (z.B, Graphitfolie) verdichtetem Graphitexpandat gewonnen werden. Vorteilhaft werden dafür Schnittabfälle genutzt, die bei der Herstellung von Dichtungen oder anderen Artikeln aus Graphitfolie zwangsläufig anfallen. Die so erhaltenen Partikel sind plättchenförmig.
Der mittlere Durchmesser der erfindungsgemäß dem carbonisierbaren Binder zugesetzten Partikel liegt zwischen 1 und 250 µm, bevorzugt werden Teilchen mit einem mittleren Durchmesser zwischen 5 und 55 µm.
In beiden Varianten der erfindungsgemäß dem carbonisierbaren Binder zugesetzten Partikel, d.h. sowohl in Naturgraphitilocken als auch in den durch Zerkleinern von Graphitfolie gewonnenen plättchenformigen Partikeln liegt die typische Schichtebenenstruktur des Graphits vor, welche die für Graphit charakteristische hohe Anisotropie der thermischen Leitfähigkeit bewirkt. Die thermische Leitfähigkeit entlang der Schichtebenen, also in der Flächenausdehnung der Partikel ist mindestens um den Faktor 10, bevorzugt mindestens um den Faktor 20 höher als senkrecht zu den Schichtebenen. Bei Graphitfolie beispielsweise beträgt die Wärmeleitfähigkeit senkrecht zur Folienebene nur ca. 3 bis 5 W/K*m, während parallel zur Folienebene die Leitfähigkeit Werte zwischen ca. 100 W/K*m (bei einer Dichte von 0,6 g/cm³) und ca. 260 W/K*m (bei einer Dichte von 1,5 g/cm³) erreicht.
Da sich die flächigen anisotropen Partikel in der Binderschicht parallel zu den angrenzenden Werkstoffschichten ausrichten, ist die Wärmeleitung über die Grenzfläche zwischen den verschiedenen Werkstoffen hinweg nur gering ausgeprägt. Mit gemahlenem Koks als Füllstoff würde aufgrund der mehr isotropen thermischen Leitfähigkeit des Kokses die Wärmeleitung zwischen den Werkstoffschichten weniger unterdrückt.
Eine weitere vorteilhafte Wirkung der flächigen Partikel aus Graphit in der Binderschicht besteht darin, dass eine solche Partikel enthaltende Binderschicht als Spannungsgleitschicht fungiert, also mechanische Spannungen zwischen den verschiedenen über die Binderschicht miteinander verbundenen Werkstoffen gemindert werden. Es wird angenommen, dass dieser Effekt auf die bekannte Scbmierwirkung von Graphit zurückzuführen ist, jedoch ist die Erfindung nicht an diese Erklärung gebunden.

Die Masse der Partikel beträgt mindestens 5 % der Masse des eingesetzten Binders. Als besonders geeignet haben sich Partikelmassen von 10 bis 30 % der Bindermasse erwiesen, jedoch ist die Erfindung nicht auf diesen Wertebereich für das Massenverhältnis zwischen Partikeln und Binder beschränkt.

Als carbonisierbare Binder können die aus dem Stand der Technik bekannten Binder wie Phenolharze, Furanharze, Epoxidharze, Pech o.ä. verwendet werden. Die Härtung, Carbonisierung und ggf Graphitierung des Binders in den Schichtverbundwerkstoffen wird in der dem Fachmann bekannten Art und Weise durchgeführt. Die Härtung kann beispielsweise mit dem bekannten Vakuumsack-Verfahren erfolgen. Die Carbonisierung bzw. Graphitierung geschieht in bekannter Weise bei Temperaturen zwischen 800 und 2.000 °C.

Die flächige anisotrope Partikel aus Graphit enthaltenden carbonisierbaren Binder sind geeignet zur Herstellung von Schichtverbundwerkstoffen aus verschiedenen für Hochtemperaturanwendungen gebräuchlichen Kohlenstoff- oder Graphitwerkstoffen bzw. deren Vorstufen, wie beispielsweise Schichten aus verdichtetem Graphitexpandat verschiedenster Dichte (einschließlich Graphitfolie), Carbonfaser-Hartfilzen, Carbonfaser-Weichfilzen, carbonfaserverstärktem Kohlenstoff, Gewebeprepregs. Die erfindungsgemäßen Verbundwerkstoffe umfassen mindestens zwei Schichten aus hochtemperaturbeständigen kohlenstoff- oder graphitbasierenden Werkstoffen.
Je nach Anwendungszweck werden vom Fachmann geeignete Werkstoffe entsprechend ihrer bekannten speziellen Vorteile ausgewählt und erfindungsgemäß durch einen carbonisierbaren Binder, welcher flächige anisotrope Partikel aus Graphit (Graphitflocken oder -plättchen) enthält, zu einem Schichtverbundwerkstoff mit der gewünschten Schichtabfolge verbunden, und der Binder wird anschließend carbonisiert.

Unter Carbonfasern sind alle Arten von Carbonfasern zu verstehen, unabhängig vom Ausgangsmaterial, wobei Polyacrylnitril-, Pech- und Cellulosefasern die gebräuchlichsten Ausgangsmaterialien sind. In den carbonfaserverstärkten Kohlenstoffmaterialien können die Carbonfasern beispielsweise als einzelne Fasern, Kurzfasern, Faserbündel, Fasermatten, Filze, Gewebe oder Gelege vorliegen, auch Kombinationen mehrerer der genannten Fasergebilde sind möglich. Die Gewebe können aus Langfasern oder aus streckgerissenen wiederversponnenen Carbonfasern (sog. Stapelfasern) bestehen.
Aus Carbonfasern gebildete oder mit Carbonfasern verstärkte Materialien tragen zur Steifigkeit und Festigkeit des Verbundwerkstoffs bei. Schichten mit geringer Dichte, z.B. aus Carbonfaserfilz oder aus Graphitexpandat, das im Gegensatz zu Graphitfolie nur auf eine Dichte zwischen 0,02 bis 0,3 g/cm³ verdichtet ist, wirken aufgrund ihrer geringen thermischen Leitfähigkeit besonders Wärme dämmend. Ein weiterer Vorteil ist ihr geringes Gewicht.
Die besonderen Vorzüge von Graphitfolie für die Anwendung in thermischen Isolierungen u.ä. wurden bereits dargelegt.
Für die unmittelbar den Innenraum des Ofens, Reaktors o.ä. begrenzende Schicht sind neben Graphitfolie auch Stapelfasern enthaltende Materialien geeignet. Aufgrund der Streckreißbehandlung bilden diese Fasern kaum noch Staub, der den Innenraum des Ofens oder Reaktors verunreinigen könnte. Auf das Problem der Staubbildung durch feine Fibrillen aus konventionellen carbonfaserverstärkten thermischen Isolierungen, die zu einer Verunreinigung des Innenraum des zu isolierenden Ofens oder Reaktors führen, wird beispielsweise in WO2004/063612 hingewiesen.

Es ist bekannt, insbesondere gekrümmte carbonfaserverstärkte Schichten in der Wickeltechnik auszubilden, vgl. dazu das europäische Patent EP 1 157 809. Dabei werden längliche (Fäden, Garne, Rovings, Bänder o.ä.) oder/und flächige textile Gebilde (Gewebe, Gelege, Filze) aus Carbonfasern, die ggf. mit einem carbonisierbaren Binder imprägniert sind, auf einen formgebenden Wickeldorn aufgewickelt.
Gekrümmte Schichten aus Graphitfolie lassen sich durch Wickeln einer Bahn aus Graphitfolie erzeugen.
Zwischen den verschiedenen Werkstoffschichten wird jeweils eine Schicht aus dem flächige anisotrope Partikel aus Graphit enthaltendem carbonisierbaren Binder aufgetragen. Dank der hohen Viskosität des flächige anisotrope Partikel aus Graphit enthaltenden Binders, die im Bereich von 20.000 bis 30.000 mPa liegt, kann dieser problemlos auch auf Flächen aufgetragen (z.B. aufgespachtelt) werden, die nicht horizontal verlaufen, beispielsweise auf gekrümmte Oberflächen, wie sie für Öfen, Reaktoren und Rohre typisch sind und beispielsweise in Wickeltechnik hergestellt werden.
Bei Bauteilen mit hohen Anforderungen an die mechanische Stabilität enthält der Schichtverbundwerkstoff bevorzugt wenigstens eine in Kreuzwicklung ausgeführte Schicht. Darunter ist zu verstehen, dass die gewickelte Schicht Lagen enthält, die zueinander in entgegengesetztem Winkel aufgewickelt wurden, z.B. +/- 45 °C. Solche Schichten können durch Wickeln von länglichen Fasergebilden wie Fäden, Garne, Rovings oder Bänder erhalten werden, wobei die Fasergebilde mit einem carbonisierbaren Binder imprägniert sein können. Bei der anschließenden Carbonisierung bzw. Graphitierung wird der ggf. in den aufgewickelten Fasergebilden enthaltene Binder carbonisiert bzw. graphitiert, so dass ein carbonfaserverstärkter Kohlenstoff-Werkstoff (CFC) erzeugt wird.

Es hat sich als vorteilhaft erwiesen, wenn die miteinander zu verbindenden Oberflächen oder zumindest die Oberfläche, auf welche der Binder aufgetragen wird, aufgerauht ist.

Mittels des flächige anisotrope Partikel aus Graphit, nämlich Naturgraphitflocken oder Plättchen aus verdichtetem Graphitexpandat, enthaltenden carbonisierbaren Binders können auch einzelne Bauteile, z.B. Rohre oder Platten aus hochtemperaturbeständigen kohlenstoff- oder graphitbasierenden Konstruktionswerkstoffen miteinander zu komplexen Bauteilen verbunden werden.

Eine spezielle Variante der Erfindung betrifft gekrümmte Bauteile, beispielsweise zylindrisch geformte Isolierungen für Öfen oder Reaktoren. Für deren Herstellung wird vorzugsweise die Wickeltechnik eingesetzt. Einige der in Frage kommenden Werkstoffe, beispielsweise Graphitexpandat, das auf eine Dichte zwischen 0,02 und 0,3 g/cm³ verdichtet ist, sind jedoch nicht flexibel genug, um eine Schicht aus dem entsprechenden Werkstoff durch Aufwickeln einer entsprechenden Materialbahn herzustellen, ohne dass diese bricht. Daher wird erfindungsgemäß vorgeschlagen, derartige gekrümmte Schichten aus einzelnen Segmenten aus dem entsprechenden Material zusammenzufügen. Die Segmente werden mittels üblicher Formgebungstechniken hergestellt, beispielsweise durch Verpressen von Graphitexpandat in einem der Form des herzustellenden Segments entsprechenden Formwerkzeug, oder durch Ausschneiden des Segments aus einem Block aus verpresstem Graphitexpandat.
Der Zusammenhalt zwischen den Segmenten innerhalb einer Schicht wird ebenso wie der Zusammenhalt zwischen den einzelnen Schichten - durch Anwendung eines carbonisierbaren Binders, dem die erfindungsgemäßen flächigen anisotropen Partikel aus Graphit zugesetzt sind, bewirkt, der anschließend gehärtet und carbonisiert wird.
Figur 1 zeigt schematisch den Querschnitt eines zylinderförmigen Bauteils 1 umfassend eine innere gewickelte Schicht 2, die beispielsweise durch Wickeln einer Lage von Graphitfolie auf einen Wickeldorn erhalten wurde, und eine äußere Schicht 3, die aus einzelnen Segmenten 3a, 3b, 3c ... aus verpresstem Graphitexpandat zusammengefügt ist. Sowohl an der Grenzfläche zwischen Schicht 2 und Schicht 3, als auch an den Grenzflächen zwischen den einzelnen Segmenten 3a, 3b, 3c wurde ein carbonisierbarer Binder, dem flächige anisotrope Partikel aus Graphit zugesetzt worden sind, appliziert.
Selbstverständlich können auf die aus den Segmenten 3a, 3b, 3c ... zusammengesetzte Schicht 3 weitere Schichten aufgebracht werden, beispielsweise eine stabilisierende Umwicklung aus Carbonfasern.

Im folgenden werden einige Materialkombinationen vorgeschlagen, die mittels eines flächige anisotrope Partikel aus Graphit enthaltenden carbonisierbaren Binders zu Schichtverbund-werkstoffen verbunden werden, welche für die Verwendung in thermischen Isolierungen, Hitzeschilden o.ä. geeignet sind.
Ein erster beispielhafter Verbundwerkstoff umfasst eine wärmereflektierende innere (d.h. dem Inneren des Ofens oder Reaktors zugewandte) Schicht aus Graphitfolie, eine die Wärmeleitung unterbindende Schicht aus Graphitexpandat, in welcher das Graphitexpandat weniger hoch verdichtet ist als in der Graphitfolie, und eine stabilisierende äußere Schicht aus carbonfaserverstärktem Kohlenstoff (CFC). Die Faserverstärkung des CFC wird entweder durch ein Gewebe oder durch kreuzweise, z.B. im Winkel +/- 45° gewickelte Lagen aus Carbonfaserfäden, -garnen oder -rovings gebildet.
Ein zweiter beispielhafter Verbundwerkstoff umfasst eine Schicht aus verpresstem Graphitexpandat und eine Schicht aus CFC.
Ein dritter beispielhafter Verbundwerkstoff umfasst ein Sandwich aus zwei Schichten Graphitfolie, die eine Schicht aus weniger hoch verdichtetem Graphitexpandat umschließen.
In Tabelle 1 sind die typischen Dicken und Dichten der einzelnen Materialien aufgelistet.

**Tabelle 1**

| Material | Dicke/[mm] | Dichte/[g/cm³] |
|---|---|---|
| Graphitfolie | 0,25-3 3 | 0,4-1,6 |
| weniger hoch verdichtetes Graphitexpandat | 2-40 | 0,02-0,3 |
| CFC | 0,2-0,75 | 1,15 |

## Patentansprüche

1. Hochtemperaturbeständiger Verbundwerkstoff, umfassend mindestens zwei Schichten aus hochtemperaturbeständigen kohlenstoff- oder graphitbasierenden Werkstoffen, welche durch einen carbonisierten Binder miteinander verbunden sind,
**dadurch gekennzeichnet, dass**
der Binder flächige anisotrope Partikel aus Graphit enthält, wobei die flächigen anisotropen Partikel Flocken aus Naturgraphit oder durch Zerkleinern von zu flächigen Gebilden verdichtetem Graphitexpandat erhaltene Partikel sind, und, wobei die thermische Leitfähigkeit in den flächigen anisotropen Partikeln aus Graphit entlang der Schichtebenen des Graphits mindestens um den Faktor 10 höher ist als senkrecht zu den Schichtebenen des Graphits.

2. Verbundwerkstoff nach Anspruch 1, **dadurch gekennzeichnet, dass**
die mindestens zwei miteinander verbundenen Schichten aus je einem der folgenden Werkstoffe bestehen: Graphitfolie, auf eine Dichte zwischen 0,02 und 0,3 g/cm³ verdichtetes Graphitexpandat, Carbonfaser-Hartfilz, Carbonfaser-Weichfila, carbonfaserverstärkter Kohlenstoff.

3. Verbundwerkstoff nach Anspruch 1, **dadurch gekennzeichnet, dass**
der Verbundwerkstoff mindestens eine gekrümmte Schicht (3) aus auf eine Dichte zwischen 0,02 und 0,3 g/cm³ verdichtetem Graphitexpandat enthält, welche aus einzelnen Segmenten (3a, 3b, 3c) zusammengesetzt sind, die durch einen carbonisierten Binder miteinander verbunden sind, der flächige anisotrope Partikel aus Graphit enthält.

4. Verbundwerkstoff nach Anspruch 1 oder 3, **dadurch gekennzeichnet, dass**
der mittlere Durchmesser der flächigen anisotropen Partikel aus Graphit zwischen 1 und 250 µm beträgt.

5. Verwendung des Verbundwerkstoffs gemäß Anspruch 1 bis 4 in Hitzeschilden, thermischen Isolierungen, Ofeneinbauten und anderen Hochtemperaturanwendungen.

6. Verfahren zum Verbinden von Schichten oder Bauteilen aus hochtemperaturbeständigen kohlenstoff oder graphitbasierenden Werkstoffen, umfassend die Schritte
• Aufbringen eines carbonisierbaren Binders, dem flächige ansisotrope Partikel aus Graphit zugesetzt sind, auf die Oberfläche der ersten Schicht oder des ersten Bauteils, die mit der zweiten Schicht oder dem zweiten Bauteil verbunden werden soll, wobei die flächigen anisotropen Partikel Flocken aus Naturgraphit oder durch Zerkleinern von zu flächigen Gebilden verdichtetem Graphitexpandat erhaltene Partikel sind, und, wobei die thermische Leitfähigkeit in den flächigen anisotropen Partikeln aus Graphit entlang der Schichtebenen des Graphits mindestens um den Faktor 10 höher ist als senkrecht zu den Schichtebenen des Graphits,
• Aufbringen der zweiten Schicht oder des zweiten Bauteils auf die mit dem Binder beschichtete Oberfläche der ersten Schicht oder des ersten Bauteils,
• Härten des Binders,
• Carbonisieren oder/und Graphitieren des Binders.

7. Verfahren nach Anspruch 6, **dadurch gekennzeichnet, dass** die mindestens zwei miteinander verbundenen Schichten aus je einem der folgenden Werkstoffe bestehen: Graphitfolie, auf eine Dichte zwischen 0,02 und 0,3 g/cm³ verdichtetes Graphitexpandat, Hartfilz, Weichfilz, carbonfaserverstärkter Kohlenstoff.

8. Verfahren nach Anspruch 7, **dadurch gekennzeichnet, dass** mindestens eine der Schichten durch Wickeln von textilen Gebilden aus Carbonfasern oder Bahnen aus Graphitfolie hergestellt wurde.

9. Verfahren nach Anspruch 7, **dadurch gekennzeichnet, dass** mindestens eine der miteinander zu verbindenden Schichten eine gekrümmte Schicht (3) aus auf eine Dichte zwischen 0,02 und 0,3 g/cm³ verdichtetem Graphitexpandat ist, welche wie folgt gebildet wird
• Herstellen einzelner Segmenten (3a, 3b, 3c), welche zusammengesetzt die Schicht (3) bilden
• Verbinden der Segmente durch einen carbonisierbaren Binder, der flächige anisotrope Partikel aus Graphit enthält
• Härten des Binders
• Carbonisieren oder/und Graphitieren des Binders

10. Verfahren nach Anspruch 6, **dadurch gekennzeichnet, dass** die miteinander zu verbindenden Bauteile Rohre oder Platten aus kohlenstoff oder graphitbasierenden Werkstoffen sind.

11. Verfahren nach Anspruch 6 oder 9, **dadurch gekennzeichnet, dass** der mittlere Durchmesser der flächigen anisotropen Partikel aus Graphit zwischen 1 und 250 µm beträgt.

12. Verfahren nach Anspruch 6 oder 9,
**dadurch gekennzeichnet, dass** die Masse der dem Binder zugesetzten flächigen anisotropen Partikel aus Graphit mindestens 5 % der Bindermasse beträgt.

## Claims

1. A high-temperature-resistant composite comprising at least two layers of high-temperature-resistant carbon-based or graphite-based materials which are joined to one another by a carbonised binder,
**characterised in that**
the binder contains planar anisotropic graphite particles, wherein the planar anisotropic particles are flakes of natural graphite or are particles obtained by comminuting compacted planar structures of graphite expandate, and wherein the thermal conductivity in the planar anisotropic graphite particles along the layer planes of the graphite is higher, at least by the factor of 10, than perpendicular to the layer planes of the graphite.

2. The composite according to Claim 1, **characterised in that** the at least two joined layers each consist of one of the following materials: graphite foil, graphite expandate compacted to a density between 0.02 and 0.3 g/m³, hard carbon fibre felt, soft carbon fibre felt or carbon fibre reinforced carbon.

3. The composite according to Claim 1, **characterised in that** the composite contains at least one curved layer (3) formed of graphite expandate compacted to a density between 0.02 and 0.3 g/cm³ and composed of individual segments (3a, 3b, 3c) which are joined to one another by a carbonised binder containing planar anisotropic graphite particles.

4. The composite according to Claim 1 or 3, **characterised in that** the mean diameter of the planar anisotropic graphite particles is between 1 and 250 µm.

5. Use of the composite according to Claims 1 to 4 in heat shields, thermal insulations, furnace internals and other high-temperature applications.

6. The method for joining layers or components formed of high-temperature-resistant carbon-based or graphite-based materials, comprising the following steps:
• application of a carbonisable binder, to which planar anisotropic graphite particles have been added, to the surface of the first layer or the first component which is to be joined to the second layer or the second component, wherein the planar anisotropic particles are flakes of natural graphite or are particles obtained by comminuting graphite expandate compacted to form planar structures, and wherein the thermal conductivity in the planar anisotropic graphite particles along the layer planes of the graphite is higher, at least by the factor of 10, than perpendicular to the layer planes of the graphite,
• application of the second layer or the second component to the binder-coated surface of the first layer or first component,
• curing of the binder,
• carbonisation and/or graphitisation of the binder.

7. The method according to Claim 6, **characterised in that** the at least two joined layers each consist of the one of the following materials: graphite foil, graphite expandate compacted to a density between 0.02 and 0.3 g/m³, hard carbon fibre felt, soft carbon fibre felt or carbon fibre reinforced carbon.

8. The method according to Claim 7, **characterised in that** at least one of the layers has been produced by winding textile structures formed of carbon fibres or sheets formed of graphite foil.

9. The method according to Claim 7, **characterised in that** at least one of the layers to be joined is a curved layer (3) formed of graphite expandate compacted to a density between 0.02 and 0.3 g/cm³ and is formed as follows
• production of individual segments (3a, 3b, 3c), which when assembled form the layer (3),
• joining of the segments by a carbonisable binder, which contains planar anisotropic graphite particles,
• curing of the binder,
• carbonisation and/or graphitisation of the binder.

10. The method according to Claim 6, **characterised in that** the components to be joined to one another are tubes or plates formed of carbon-based or graphite-based materials.

11. The method according to Claim 6 or 9, **characterised in that** the mean diameter of the planar anisotropic particles formed of graphite is between 1 and 250 µm.

12. The method according to Claim 6 or 9, **characterised in that** the mass of the planar anisotropic graphite particles added to the binder is at least 5 % of the binder mass.

## Revendications

1. Procédé pour l'application d'un revêtement sur une face plate, notamment sur la face avant et sur les surfaces d'arêtes d'une structure plane en film graphite,
comprenant les étapes
• application de la matière de revêtement par poudrage électrostatique
• cycle de frittage, respectivement cycle de fusion de la poudre vaporisée,
**caractérisé en ce que**
pendant le poudrage, on met en contact électrique la structure plane à revêtir en film graphite sur une surface limitée, à une distance d'au moins 5 mm des bords, pratiquement au milieu de sa face arrière opposée au sens de vaporisation.

2. Procédé selon la revendication 1, **caractérisé en ce que** l'épaisseur de couche du revêtement appliqué est au maximum de 10 µm.

3. Procédé selon la revendication 1, **caractérisé en ce que** le matière de revêtement est une matière thermoplastique.

4. Procédé selon la revendication 3, **caractérisé en ce que** la matière de revêtement est du polyéthylène, du polypropylène et du polyester.

5. Procédé selon la revendication 3, **caractérisé en ce que** la matière de revêtement est un agent de liaison polymère qui contient des particules conductrices thermique.

6. Procédé selon la revendication 5, **caractérisé en ce que** les particules conductrices thermique ne sont pas conductrices électrique.

7. Procédé selon la revendication 5 ou 6, **caractérisé en ce que** l'agent de liaison polymère contient en tant que particules du nitrure de bore dans une quantité de 1 à 15 % en poids.

8. Procédé selon la revendication 7, **caractérisé en ce que** l'agent de liaison polymère contient en tant que particules du nitrure de bore hexagonal dans une quantité de 5 à 10 % en poids.

9. Procédé selon la revendication 1, **caractérisé en ce que** pendant le cycle de frittage ou de fusion, il s'effectue un échauffement à une température comprise entre 160 et 280°C et **en ce que** cette température est maintenue pendant env. de 15 à 30 minutes.

10. Utilisation des structures planes en film graphite revêtues selon l'une quelconque des revendications 1 à 5 pour la dissipation de chaleur dans des appareils électroniques.

11. Procédé selon la revendication 6 ou 9, **caractérisé en ce que** le diamètre moyen des particules anisotropes planes en graphite est situé entre 1 et 250 µm.

12. Procédé selon les revendications 6 ou 9, **caractérisé en ce que** les particules anisotropes planes en graphite, lesquelles sont ajoutées au liant, représentent au moins 5 % en masse par rapport au liant.
